# EUROPÄISCHE PATENTANMELDUNG

(11) **EP 1 912 184 A2**
(43) Veröffentlichungstag der Anmeldung: **16.04.2008**
(21) Anmeldenummer: 08001183.6
(22) Anmeldetag: 17.03.2006
(51) Int. Cl.: G07F 7/10, G06K 19/06, G06F 21/00

(54) **Vorrichtung und Verfahren zur Erzeugung von Daten**

(30) Priorität: 02.05.2005 DE 102005020313
(62) Teilanmeldung aus: 06005561.3
(71) Anmelder: Giesecke & Devrient GmbH, 81677 München (DE)
(72) Erfinder: Hagen, Patzke, 81735 München (DE)

(57) **Zusammenfassung**

Vorrichtung zur Erzeugung von Daten, wobei die Vorrichtung als ein tragbares Modul (1) ausgebildet ist, das eine USB-Schnittstelle (6) und einen Speicher (5) aufweist, in dem für die Erzeugung der Daten benötigte Geheimdaten abgelegt sind. Die Erzeugung der Daten wird gestartet, sobald das tragbare Modul (1) feststellt, dass im Speicher (5) des tragbaren Moduls (1) eine oder mehrere Dateien vorhanden sind, die für die Erzeugung der Daten benötigt werden.

## Beschreibung

Die Erfindung betrifft eine Vorrichtung und ein Verfahren zur Erzeugung von Daten für eine Initialisierung von Sicherheüsdatenträgern.

Sicherheitsdatenträger können beispielsweise als Chipkarten ausgebildet sein und bei unterschiedlichen Anwendungen eingesetzt werden, bei denen Sicherheitsaspekte eine Rolle spielen. Beispielsweise können Sicherheitsdatenträger zur Abwicklung von Transaktionen des Zahlungsverkehrs, als Ausweisdokumente bei Zugangskontrollen, als Berechtigungsnachweis zur Nutzung eines Mobilfunksystems usw. eingesetzt werden. Bevor ein Sicherheitsdatenträger erstmalig eingesetzt werden kann, ist es in der Regel erforderlich, im Rahmen einer Initialisierung und einer nachfolgenden Personalisierung Daten in einen nichtflüchtigen Speicher des Sicherheitsdatenträgers einzuschreiben. Bei der Initialisierung werden insbesondere solche Daten eingeschrieben, die für mehrere Sicherheitsdatenträger gleich sind. Dies können beispielsweise Ergänzungen eines Betriebssystems des Sicherheitsdatenträgers sein, das in einem Permanentspeicher des Sicherheitsdatenträgers gespeichert ist oder auch Anwendungen bzw. Teile von Anwendungen. Weiterhin werden bei der Initialisierung Dateistrukturen angelegt und es wird die nachfolgende Personalisierung vorbereitet. Bei der Personalisierung werden im nichtflüchtigen Speicher insbesondere personenbezogene Daten eingeschrieben. Es können aber beispielsweise auch Anwendungen installiert werden usw. Die Grenzen zwischen Initialisierung und Personalisierung sind nicht starr, so dass ein gewisser Spielraum besteht, Daten im Rahmen der Initialisierung oder im Rahmen der Personalisierung in den Sicherheitsdatenträger einzuschreiben.

Um sicherzustellen, dass für die Initialisierung zulässige Daten verwendet werden, werden diese kryptographisch abgesichert. Wenn die für die Initialisierung vorgesehenen Daten nicht vom Hersteller des Sicherheitsdatenträgers, sondern von einem Dritten erzeugt werden, ist es erforderlich, die für die kryptographische Absicherung benötigten Schlüssel dem Dritten zugänglich zu machen. Dies macht aufwendige Sicherheitsvorkehrungen erforderlich, um ein Ausspähen der Schlüssel zu verhindern.

Der Erfindung liegt die Aufgabe zugrunde, die Erzeugung von Daten für die Initialisierung von Sicherheitsdatenträgern auf einfache und sichere Weise zu ermöglichen.

Diese Aufgabe wird durch eine Vorrichtung mit der Merkmalskombination des Anspruchs 1 und durch ein Verfahren mit der Merkmalskombination des Anspruchs 8 gelöst.

Die erfindungsgemäße Vorrichtung zur Erzeugung von Daten für eine Initialisierung von Sicherheitsdatenträgern zeichnet sich dadurch aus, dass sie als ein tragbares Modul ausgebildet ist, das eine USB-Schnittstelle und einen Speicher aufweist, in dem für die Erzeugung der Initialisierungsdaten benötigte Geheimdaten abgelegt sind.

Die Erfindung hat den Vorteil, dass die Erzeugung von Initialisierungsdaten einfach durchführbar ist und dennoch ein hohes Sicherheitsniveau erreicht wird. Insbesondere ist es nicht erforderlich, geheime Daten online zu übertragen. Weiterhin ist eine Handhabung der geheimen Daten außerhalb der erfindungsgemäßen Vorrichtung bzw. ein Kenntnis der geheimen Daten für die Erzeugung der Initialisierungsdaten nicht erforderlich. Durch die USB-Schnittstelle ist die erfindungsgemäße Vorrichtung sehr universell einsetzbar. Außerdem erlaubt die USB-Schnittstelle eine sehr schnelle und einfach durchführbare Datenübertragung.

Im Speicher können auch Routinen zur Erzeugung der Initialisierungsdaten implementiert sein, so dass die erfindungsgemäße Vorrichtung autark betrieben werden kann und lediglich entsprechende Eingangsdaten benötigt. Insbesondere können dadurch auch geheim zu haltende Routinen verwendet werden. Die Routinen können ein Bestandteil eines Anwendungsprogramms sein oder als ein Zusatz zu einem Betriebssystem ausgebildet sein.

Die Initialisierungsdaten können einen kryptographisch gesicherten Datensatz umfassen. Weiterhin können die Initialisierungsdaten einen Satz von Parametern umfassen, der dem kryptographisch gesicherten Datensatz zugeordnet ist und für die Durchführung der Initialisierung der Sicherheitsdatenträger auf Basis des kryptographisch gesicherten Datensatzes benötigt wird. Die erfindungsgemäße Vorrichtung weist vorzugsweise eine gegen Manipulationen und/oder gegen Ausspähen geschützte Hardware auf. Dies hat den Vorteil, dass die erfindungsgemäße Vorrichtung bereits für sich genommen geschützt ist und deshalb nicht in einer geschützten Umgebung betrieben werden muss. Weiterhin kann vorgesehen sein, dass die erfindungsgemäße Vorrichtung nur für einen vorgegebenen Zeitraum für die Erzeugung von Initialisierungsdaten nutzbar ist. Auch durch diese Maßnahme kann die Sicherheit erhöht werden, da einem Dritten, der die erfindungsgemäße Vorrichtung unrechtmäßig in seinem Besitzt hat, nur eine begrenzte Zeit für Manipulationsversuche bleibt und zudem verhindert wird, dass Vorrichtungen, deren Technik veraltet ist, weiterhin eingesetzt werden.

Beim erfindungsgemäßen Verfahren zur Erzeugung von Daten für eine Initialisierung von Sicherheitsdatenträgern werden einem tragbaren Modul über eine USB-Schnittstelle Roh-Daten übermittelt und die Initialisierungsdaten vom tragbaren Modul mit Hilfe der Roh-Daten und mit Hilfe von Geheimdaten, die in einem Speicher des tragbaren Moduls abgelegt sind, erzeugt.

Vorzugsweise wird wenigstens eine Datei mit den Roh-Daten oder mit sonstigen für die Erzeugung der Initialisierungsdaten benötigten Daten über die USB-Schnittstelle in ein erstes Verzeichnis im Speicher des tragbaren Moduls übertragen. Dies stellt eine sehr einfache und effiziente Möglichkeit der Dateneingabe dar. Die Erzeugung der Initialisierungsdaten kann beispielsweise gestartet werden, sobald im Speicher des tragbaren Moduls eine oder mehrere Dateien vorhanden sind, die für die Erzeugung der Initialisierungsdaten benötigt werden. Dies kann ohne großen Aufwand vom tragbaren Modul festgestellt werden. Ebenso ist es auch möglich, die Erzeugung der Initialisierungsdaten zu starten, wenn ein vorgegebener Befehl an das tragbare Modul übermittelt wird oder eine Schalteinrichtung des tragbaren Moduls betätigt wird. Auf diese Weise ist es möglich, die Dateneingabe und die Erzeugung der Initialisierungsdaten zeitlich zu trennen. Zum Schutz gegen Missbrauch kann vorgesehen werden, dass die Erzeugung der Initialisierungsdaten nur dann gestartet wird, wenn vom tragbaren Modul das Vorliegen einer Berechtigung zur Erzeugung der Initialisierungsdaten festgestellt wird.

Die erzeugten Initialisierungsdaten werden vorzugsweise in einem zweiten Verzeichnis im Speicher des tragbaren Moduls für eine Übertragung über die USB-Schnittstelle bereitgestellt. Als eine weitere Sicherheitsmaßnahme kann vorgesehen sein, dass im Speicher des tragbaren Moduls gespeicherte sicherheitsrelevante Daten jeweils gelöscht werden, wenn sie nicht mehr benötigt werden.

Die Erfindung wird nachstehend anhand der in der Zeichnung dargestellten Ausführungsbeispiele erläutert.

Es zeigen:
- Fig.1: eine Blockdarstellung eines erfindungsgemäßen USB-Moduls in ei-ner möglichen Betriebsumgebung in einer stark vereinfachten Dar-stellung,
- Fig. 2: ein Flussdiagramm für die Erzeugung von Initialisierungsdaten mit Hilfe des erfindungsgemäßen USB-Moduls und
- Fig. 3: ein Flussdiagramm für die Erzeugung von biometrischen Referenz-daten mit Hilfe des erfindungsgemäßen USB-Moduls.

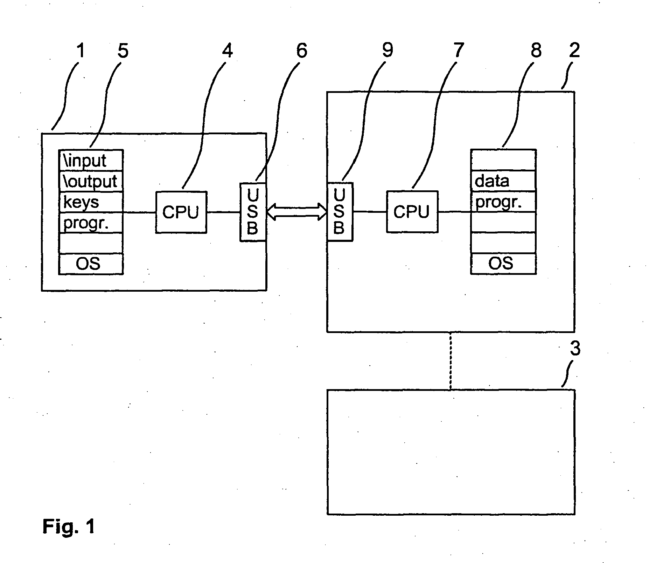

Fig.1 zeigt eine Blockdarstellung eines erfindungsgemäßen USB-Moduls 1 in einer möglichen Betriebsumgebung in einer stark vereinfachten Darstellung. USB stellt dabei die übliche Abkürzung für Universal Serial Bus dar. Zusätzlich zu dem USB-Modul 1 sind in Fig.1 ein Personalcomputer 2 und eine Initialisierungsanlage 3 dargestellt.

Das USB-Modul 1 ist tragbar ausgebildet und kann äußerlich beispielsweise wie ein Memorystick ausgebildet sein. Das USB-Modul 1 weist eine Prozessoreinheit 4, einen Speicher 5 und eine USB-Schnittstelle 6 auf, wobei die Prozessoreinheit 4 sowohl mit dem Speicher 5 als auch mit der USB-Schnittstelle 6 verbunden ist. Die USB-Schnittstelle 6 ermöglicht eine sehr schnelle Datenübertragung und stellt einen weit verbreiteten Standard dar, so dass das USB-Modul 1 problemlos mit nahezu beliebigen Geräten kommunizieren kann.

Der Speicher 5 kann physikalisch aus unterschiedlichen Speicherarten, beispielsweise einem nur lesbaren Permanentspeicher (ROM), einem änderbaren nichtflüchtigen Speicher (EEPROM) und einem flüchtigen Speicher (RAM) bestehen, zwischen denen in Fig.1 nicht unterschieden wird. Der Speicher 5 dient sowohl der Speicherung von Software als auch von Daten. Beispielsweise enthält der Speicher 5 ein Betriebssystem zum Betreiben der Prozessoreinheit 4 und wenigstens ein Anwendungsprogramm. Wie im Folgenden noch näher erläutert wird, dient der Speicher 5 außerdem der Speicherung von Geheimdaten, Eingabedaten, Ausgabedaten usw. Beim dargestellten Ausführungsbeispiel ist für die Eingabedaten ein Verzeichnis ,,\input" und für die Ausgabedaten ein Verzeichnis ,,\output" vorgesehen.

Der Personalcomputer 2 weist eine Prozessoreinheit 7, einen Speicher 8 und eine USB-Schnittstelle 9 auf. Zum Speicher 8 werden im dargestellten Ausführungsbeispiel auch Massenspeichermedien, wie beispielsweise eine Festplatte, eine CD-ROM usw. gerechnet. Der Speicher 8 enthält beispielsweise ein Betriebssystem für den Personalcomputer 2, wenigstens ein Anwendungsprogramm und eine Reihe von Daten, auf die im Folgenden noch näher eingegangen wird. Über seine USB-Schnittstelle 9 steht der Personalcomputer 2 mit dem USB-Modul 1 in Datenverbindung. Hierzu kann das USB-Modul 1 einen nicht figürlich dargestellten USB-Stecker aufweisen, der in eine USB-Buchse des Personalcomputers 2 eingesteckt ist, so dass die USB-Schnittstelle 6 des USB-Moduls 1 und die USB-Schnittstelle 9 des Personalcomputers 2 miteinander verbunden sind.

Des weiteren kann auch eine Datenverbindung zwischen dem Personalcomputer 2 und der Initialisierungsanlage 3 bestehen, wobei der Personalcomputer 2 und die Initialisierungsanlage 3 am gleichen Ort oder auch entfernt voneinander angeordnet sein können. Ebenso ist es auch möglich, dass der Personalcomputer 2 entfällt und das USB-Modul 1 in eine Komponente der Initialisierungsanlage 3 eingesteckt wird. Bei einer weiteren Variante ist der Personalcomputer 2 ein Bestandteil der Initialisierungsanlage 3.

Die Initialisierungsanlage 3 kann beispielsweise der Initialisierung von Chipkarten oder anderen Sicherheitsdatenträgern, wie beispielsweise Token, Chipmodulen usw. dienen. Der Aufbau der Initialisierungsanlage 3 ist in Fig.1 nicht dargestellt, da dies für die Erläuterung der Erfindung nicht erforderlich ist. Im Rahmen der Initialisierung werden Daten und Programmcode in die Chipkarten eingeschrieben und diese dadurch für ihren späteren Einsatz vorbereitet. Im Folgenden wird der Begriff Daten jeweils so verwendet, dass er jegliche Art von Daten und insbesondere auch Programmcode umfasst, soweit dies im jeweiligen Zusammenhang sinnvoll ist. Die für die Initialisierung der Chipkarten verwendeten Daten sind kryptographisch abgesichert, um Manipulationen, insbesondere die Durchführung einer Initialisierung mit unzulässigen Daten, zu verhindern.

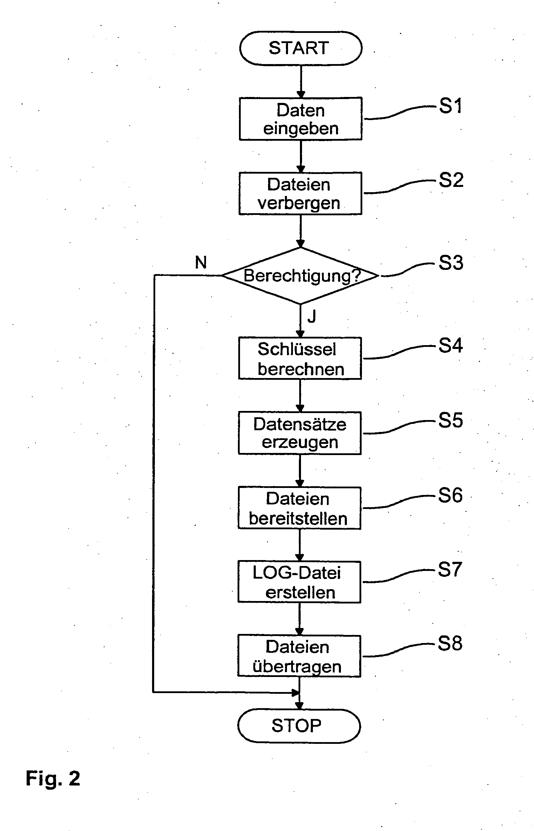

Fig. 2 zeigt ein Flussdiagramm für die Erzeugung von Initialisierungsdaten mit Hilfe des erfindungsgemäßen USB-Moduls 1. Der Durchlauf des Flussdiagramms beginnt mit einem Schritt S1, in dem vom Personalcomputer 2 Daten in das Verzeichnis "\input" im Speicher 5 des USB-Moduls 1 eingeschrieben werden. Insbesondere wird in das Verzeichnis ,,\ input" eine Datei mit unverschlüsselten Roh-Daten für die Initialisierung eingeschrieben, die im Folgenden als NAME.HEX bezeichnet wird. Die Roh-Daten liegen in einem Textformat, beispielsweise dem IntelHEX Format oder dem Motorola S-record-Format, vor. Weiterhin wird eine beispielhaft als NAME. KEY bezeichnete Datei in das Verzeichnis "\input" kopiert, die in verschlüsselter Form einen Konfigurationsdatensatz enthält. Der Konfigurationsdatensatz ist auf die zu initialisierenden Chipkarten abgestimmt. Schließlich wird eine Datei in das Verzeichnis "\input" kopiert, die Berechtigungsdaten enthält. Diese Datei wird als USER.ID bezeichnet. Die Berechtigungsdaten können in unverschlüsselter oder in verschlüsselter Form gespeichert sein.

An Schritt S1 schließt sich ein Schritt S2 an, in dem das Verzeichnis "\input" im Speicher 5 des USB-Moduls 1 verborgen wird, um zu verhindern, dass weitere Dateien in dieses Verzeichnis kopiert werden bzw. vorhandene Dateien entfernt werden oder dass Dateiinhalte geändert werden. Der Schritt S2 und eine Reihe weiterer Schritte werden mit Hilfe eines der im Speicher 5 des USB-Moduls 1 gespeicherten Anwendungsprogramme ausgeführt. Das Starten dieses Anwendungsprogramms kann beispielsweise an das Vorhandensein geeigneter Dateien im Verzeichnis "\input" im Speicher 5 des USB-Moduls 1 geknüpft sein. Ebenso ist es möglich, das Anwendungsprogramm durch ein USB-Kommando oder durch Betätigen einer dafür vorgesehenen Schalteinrichtung des USB-Moduls 1 auszulösen. Anstelle des Anwendungsprogramms kann auch eine Erweiterung des Betriebssystems des USB-Moduls 1 für die Durchführung des Schritts S2 und weiterer Schritte vorgesehen sein.

In einem sich an Schritt S2 anschließenden Schritt S3 wird vom USB-Modul 1 geprüft, ob die in der Datei USER.ID enthaltenen Berechtigungsdaten zur Erzeugung von Initialisierungsdaten mit dem USB-Modul 1 berechtigen. Die Berechtigung kann beispielsweise mit Hilfe der geheimen Daten geprüft werden, die im USB-Modul 1 gespeichert sind. Falls die Prüfung ergibt, dass keine Berechtigung vorliegt, ist der Durchlauf des Flussdiagramms beendet. Liegt dagegen eine Berechtigung vor, so schließt sich an Schritt S3 ein Schritt S4 an, in dem vom USB-Modul 1 die Struktur der Daten in der Datei NAME.KEY geprüft wird und mit Hilfe dieser Daten und gegebenenfalls der geheimen Daten für die weiteren Schritte benötigte Schlüssel berechnet werden. Schritt S4 kann insbesondere so ausgebildet sein, dass die weitere Bearbeitung abgebrochen wird und evtl. zusätzlich eine Löschung der geheimen Daten des USB-Moduls 1 veranlasst wird, wenn eine fehlerhafte Datenstruktur festgestellt wird.

Danach wird ein Schritt S5 ausgeführt, in dem vom USB-Modul 1 auf Basis der Datei NAME.HEX, welche die Roh-Daten enthält, mit Hilfe der im Schritt S4 berechneten Schlüssel und gegebenenfalls der geheimen Daten ein Initialisierungsdatensatz und ein Parameterdatensatz erzeugt werden. Bei der Erzeugung des Initialisierungsdatensatzes und/oder des Parameterdatensatzes können zudem vom USB-Modul 1 erzeugte Daten, wie z. B. Zufallszahlen, und /oder geheime Routinen, die zur Erzeugung nötig sind, berücksichtigt werden. Der Initialisierungsdatensatz wird verschlüsselt und als eine Datei NAME.INI gespeichert. Der Parameterdatensatz wird als eine Datei NAME.PAR gespeichert. Er dient zur Authentisierung gegenüber dem zu initialisierenden Datenträger und ist an den Initialisierungsdatensatz gebunden.

Auf Schritt S5 folgt ein Schritt S6, in dem die Dateien NAME.INI und NAME.PAR im Verzeichnis "\output" im Speicher 5 des USB-Moduls 1 bereitgestellt werden. In einem sich anschließenden Schritt S7 wird vom USB-Modul 1 eine Datei XXnnnnnn.LOG erstellt, wobei XX ein Kürzel für einen Dateinamen und nnnnnn eine fortlaufende Nummer darstellt. Falls alle bisherigen Schritte ordnungsgemäß und fehlerfrei durchlaufen wurden, enthält die Datei XXnnnnnn.LOG den Eintrag "OK". Andernfalls enthält die Datei XXnnnnnn.LOG eine Fehlermeldung. Außerdem zeigt das Vorhandensein der Datei XXnnnnnn.LOG an, dass das USB-Modul 1 die vorgesehenen Operationen abgeschlossen hat. Auf Schritt S7 folgt ein Schritt S8, in dem die Dateien NAME.INI und NAME.PAR vom Verzeichnis "\output" im Speicher 5 des USB-Moduls 1 auf den Personalcomputer 2 kopiert werden. Mit Schritt S8 ist der Durchlauf des Flussdiagramms beendet.

Die geheimen Daten, die intern in dem USB-Modul 1 gespeichert sind, werden vorab vom Hersteller der zu initialisierenden Datenträger in das USB-Modul 1 eingebracht. Stellt man an sich bekannte Mechanismen zur Absicherung einer Änderung der geheimen Daten bereit, beispielsweise Änderung erst nach gegenseitiger Authentisierung und durch verschlüsselte Übertragung der neuen geheimen Daten, so kann der Hersteller der zu initialisierenden Datenträger die geheimen Daten im USB-Modul 1 auch nachträglich noch ändern. Die geheimen Daten können unter anderem umfassen: einen Schlüssel K_Enc zur Verschlüsselung der Initialisierungsdaten bzw. einen Master-Schlüssel zur Ableitung eines solchen Schlüssels, einen Kontrollwert oder Schlüssel K_User zur Überprüfung der Berechtigung des Benutzers des USB-Moduls 1 und Daten zur Bestimmung des Parameterdatensatzes, also beispielsweise einen Schlüssel K_Auth oder Master-Schlüssel zur Ableitung eines solchen Schlüssels, der für die Berechnung eines Authentisierungswertes zur Authentisierung des Initialisierers gegenüber den zu initialisierenden tragbaren Datenträgern erforderlich ist. Ferner Schlüssel können die geheimen Daten Werte zur Einbringung in die Initialisierungsdaten bzw. Master-Schlüssel zur Erzeugung solcher Schlüssel und geheime Routinen enthalten. Die geheimen Routinen können unter anderem die Information beinhalten, wie aus den Rohdaten die Initialisierungsdaten erstellt werden, also beispielsweise an welchen Stellen Änderungen oder Ergänzungen der Rohdaten vorgenommen werden müssen.

Die auf die vorstehend beschriebene Weise erzeugten Dateien NAME.INI und NAME.PAR können vom Personalcomputer 2 an die Initialisierungsanlage 3 weitergeleitet werden, falls eine entsprechende Datenverbindung vorhanden ist und unmittelbar für die Initialisierung der Chipkarten verwendet werden. Ebenso ist es auch möglich, die Dateien NAME.INI und NAME.PAR für eine spätere Verwendung zwischenzuspeichern. Falls keine Datenverbindung zwischen dem Personalcomputer 2 und der Initialisierungsanlage 3 besteht, können die Dateien auch auf einem externen Speichermedium gespeichert werden und mit diesem Speichermedium zur Initialisierungsanlage 3 transportiert werden.

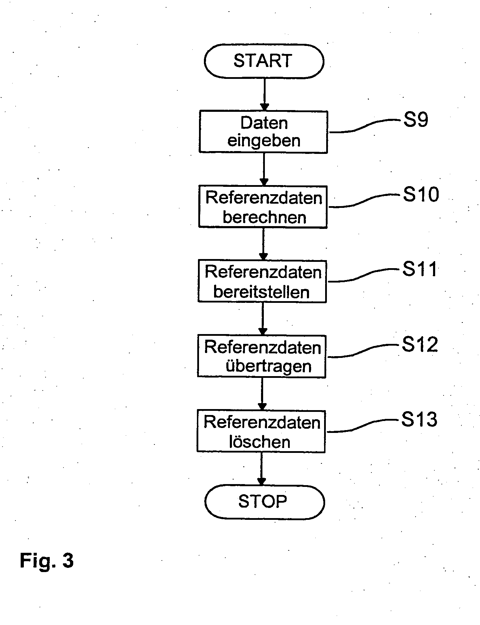

Mit dem USB-Modul 1 können auch Initialisierungsdatensätze und Parameterdatensätze zur Initialisierung von anderen Sicherheitsdatenträgern als Chipkarten, insbesondere von andersartig ausgebildeten tragbaren Datenträgern erzeugt werden. Ebenso besteht die Möglichkeit, das USB-Modul 1 so auszubilden, dass damit andere Daten als die vorstehend beschriebenen Initialisierungsdatensätze erzeugt werden können. Wie anhand von Fig. 3 näher erläutert wird, kann das USB-Modul 1 beispielsweise auch zur Erzeugung von biometrischen Referenzdaten verwendet werden.

Fig. 3 zeigt ein Flussdiagramm für die Erzeugung von biometrischen Referenzdaten mit Hilfe des erfindungsgemäßen USB-Moduls 1. Hierzu ist bei der in Fig.1 dargestellten Anordnung die Initialisierungsanlage 3 durch ein biometrisches Erkennungssystem zu ersetzen. Dabei kann der Personalcomputer 2 auch entfallen und das USB-Modul 1 direkt an das biometrische Erkennungssystem angeschlossen sein. Ebenso kann der Personalcomputer 2 auch ein Bestandteil des biometrischen Erkennungssystems sein.

Im Folgenden wird die Erzeugung von Referenzdaten für einen Fingerabdruck näher beschrieben. In entsprechender Weise können auch Referenzdaten für andere biometrische Merkmale, beispielsweise das Gesicht eines Benutzers, die Iris eines Benutzers usw. erzeugt werden.

Der Durchlauf des Flussdiagramms beginnt mit einem Schritt S9, in dem eine Graphikdatei FINGERPRINT.PCX in ein Verzeichnis "\rawdata" im Speicher 5 des USB-Moduls 1 kopiert wird. Auf Schritt S9 folgt ein Schritt S10, in dem vom USB-Modul 1, beispielsweise mit Hilfe eines proprietären Algorithmus, aus den graphischen Fingerabdruckdaten der Datei FINGERPRINT.PCX Referenzdaten für relevante Minutien des zugrunde liegenden Fingerabdrucks berechnet werden. Die so berechneten Referenzdaten werden mit einer Prüfsumme versehen, mit deren Hilfe ermittelt werden kann, ob die Referenzdaten korrekt und authentisch sind. Anschließend wird ein Schritt S11 ausgeführt, in dem die berechneten Referenzdaten in einer Datei MINUTIAE.DAT abgelegt und dadurch für die weitere Verwendung bereitgestellt werden. Die Datei MINUTIAE.DAT wird beispielsweise in einem Verzeichnis "\convert" im Speicher 5 des USB-Moduls 1 angelegt. An Schritt S11 schließt sich ein Schritt S12 an, in dem die Datei MINUTIAE.DAT vom Verzeichnis "\convert" im Speicher 5 des USB-Moduls 1 auf den Personalcomputer 2 kopiert wird. In einem darauf folgenden Schritt S13 wird die Datei MINUTIAE.DAT im Speicher 5 des USB-Moduls 1 gelöscht. Der Löschvorgang kann beispielsweise durch das Kopieren ausgelöst werden oder nach einer vorgegebenen Zeit automatisch durchgeführt werden. Mit Schritt S13 ist der Durchlauf des Flussdiagramms beendet.

Analog zu Fig. 2 können bei dem in Fig. 3 dargestellten Flussdiagramm die Schritte S9 bis S13 mit Hilfe eines Anwendungsprogramms oder eines Teils des Betriebssystems des USB-Moduls 1 durchgeführt werden. Auch beim Starten des Anwendungsprogramms kann analog vorgegangen werden.

Die auf die beschriebene Weise erzeugten Referenzdaten können beispielsweise über eine Online-Verbindung vom Personalcomputer 2 an das Erkennungssystem übertragen werden. Ebenso ist es möglich, die Daten vom Personalcomputer 2 auf ein externes Speichermedium zu übertragen und dieses externe Speichermedium danach dem Erkennungssystem zur Verfügung zu stellen. Weiterhin können die Referenzdaten auf dem Personalcomputer 2 zwischengespeichert werden oder, wenn der Personalcomputer 2 ein Bestandteil des Erkennungssystems ist, dauerhaft auf dem Personalcomputer verbleiben. Bei einer Abwandlung wird das USB-Modul 1 für die Ermittlung der Referenzdaten mit dem Erkennungssystem verbunden, so dass die Referenzdaten direkt vom USB-Modul 1 an das Erkennungssystem übertragen werden können. Das Erkennungssystem kann die Referenzdaten jeweils zur Prüfung von erfassten Fingerabdruckdaten verwenden und dadurch beispielsweise eine Identität und/oder eine Berechtigung einer Person feststellen.

Auf die geschilderte Weise können anstelle von biometrischen Referenzdaten auch andere Referenzdaten erzeugt werden.

Sowohl im Hinblick auf die Erzeugung von Initialisierungsdaten als auch die Erzeugung von Referenzdaten, können beim USB-Modul 1 verschiedene Sicherheitsmaßnahmen getroffen werden, um ein Ausspähen oder einen sonstigen Missbrauch zu verhindern. Beispielsweise kann das USB-Modul 1 eine Hardware aufweisen, die gegen Ausspähen und/ oder Manipulationen geschützt ist. Ein derartiger Schutz ist insbesondere im Hinblick auf die Prozessoreinheit 4 und wenigstens solche Bereiche des Speichers 5 vorgesehen, in denen sicherheitsrelevante Daten gespeichert werden. Weiterhin besteht die Möglichkeit, in möglichst alle Verschlüsselungen eine Zufallskomponente einfließen zu lassen. Zudem kann die Sicherheit dadurch erhöht werden, dass sämtliche sicherheitsrelevanten Daten gelöscht werden, sobald sie nicht mehr benötigt werden. Als weitere Sicherheitsmaßnahme kann die Anordnung der Daten in den Dateien verschleiert werden. Außerdem kann vorgesehen werden, dass das USB-Modul 1 nur für eine begrenzte Zeit nutzbar ist.

Es folgt eine nach Auflistung von Aspekten dieser Anmeldung.

Aspekt 1: Vorrichtung zur Erzeugung von Daten für eine Initialisierung von Sicherheitsdatenträgern, dadurch gekennzeichnet, dass die Vorrichtung als ein tragbares Modul (1) ausgebildet ist, das eine USB-Schnittstelle (6) und einen Speicher (5) aufweist, in dem für die Erzeugung der Initialisierungsdaten benötigte Geheimdaten abgelegt sind.

Aspekt 2: Vorrichtung nach Aspekt 1, dadurch gekennzeichnet, dass im Speicher (5) Routinen zur Erzeugung der Initialisierungsdaten implementiert sind.

Aspekt 3: Vorrichtung nach Aspekt 2, dadurch gekennzeichnet, dass die Routinen ein Bestandteil eines Anwendungsprogramms sind oder als ein Zusatz zu einem Betriebssystem ausgebildet sind.

Aspekt 4: Vorrichtung nach einem der vorhergehenden Aspekte, dadurch gekennzeichnet, dass die Initialisierungsdaten einen kryptographisch gesicherten Datensatz umfassen.

Aspekt 5: Vorrichtung nach Aspekt 4, dadurch gekennzeichnet, dass die Initialisierungsdaten einen Satz von Parametern umfassen, der dem kryptographisch gesicherten Datensatz zugeordnet ist und für die Durchführung der Initialisierung der Sicherheitsdatenträger auf Basis des kryptographisch gesicherten Datensatzes benötigt wird.

Aspekt 6: Vorrichtung nach einem der vorhergehenden Aspekte, dadurch gekennzeichnet, dass sie eine gegen Manipulationen und/ oder gegen Ausspähen geschützte Hardware aufweist.

Aspekt 7: Vorrichtung nach einem der vorhergehenden Aspekte, dadurch gekennzeichnet, dass sie nur für einen vorgegebenen Zeitraum für die Erzeugung von Initialisierungsdaten nutzbar ist.

Aspekt 8: Verfahren zur Erzeugung von Daten für eine Initialisierung von Sicherheitsdatenträgern, dadurch gekennzeichnet, dass einem tragbaren Modul (1) über eine USB-Schnittstelle (6) Roh-Daten übermittelt werden und die Initialisierungsdaten vom tragbaren Modul (1) mit Hilfe der Roh-Daten und mit Hilfe von Geheimdaten, die in einem Speicher (5) des tragbaren Moduls (1) abgelegt sind, erzeugt werden.

Aspekt 9: Verfahren nach Aspekt 8, dadurch gekennzeichnet, dass wenigstens eine Datei mit den Roh-Daten oder mit sonstigen für die Erzeugung der Initialisierungsdaten benötigten Daten über die USB-Schnittstelle (6) in ein erstes Verzeichnis im Speicher (5) des tragbaren Moduls (1) übertragen wird.

Aspekt 10: Verfahren nach einem der Aspekte 8 oder 9, dadurch gekennzeichnet, dass die Erzeugung der Initialisierungsdaten gestartet wird, sobald im Speicher (5) des tragbaren Moduls (1) eine oder mehrere Dateien vorhanden sind, die für die Erzeugung der Initialisierungsdaten benötigt werden.

Aspekt 11: Verfahren nach einem der Aspekte 8 oder 9, dadurch gekennzeichnet, dass die Erzeugung der Initialisierungsdaten gestartet wird wenn ein vorgegebener Befehl an das tragbare Modul (1) übermittelt wird oder eine Schalteinrichtung des tragbaren Moduls (1) betätigt wird.

Aspekt 12: Verfahren nach einem der Aspekte 8 bis 11, dadurch gekennzeichnet, dass die Erzeugung der Initialisierungsdaten nur dann gestartet wird, wenn vom tragbaren Modul (1) das Vorliegen einer Berechtigung zur Erzeugung der Initialisierungsdaten festgestellt wird.

Aspekt 13: Verfahren nach einem der Aspekte 8 bis 12, dadurch gekennzeichnet, dass die erzeugten Initialisierungsdaten in einem zweiten Verzeichnis im Speicher (5) des tragbaren Moduls (1) für eine Übertragung über die USB-Schnittstelle (6) bereitgestellt werden.

Aspekt 14: Verfahren nach einem der Aspekte 8 bis 13, dadurch gekennzeichnet, dass im Speicher (5) des tragbaren Moduls (1) gespeicherte sicherheitsrelevante Daten jeweils gelöscht werden, wenn sie nicht mehr benötigt werden.

## Patentansprüche

1. Vorrichtung zur Erzeugung von Daten, wobei die Vorrichtung als ein tragbares Modul (1) ausgebildet ist, das eine USB-Schnittstelle (6) und einen Speicher (5) aufweist, in dem für die Erzeugung der Daten benötigte Geheimdaten abgelegt sind und wobei die Erzeugung der Daten gestartet wird, sobald das tragbare Modul (1) feststellt, dass im Speicher (5) des tragbaren Moduls (1) eine oder mehrere Dateien vorhanden sind, die für die Erzeugung der Daten benötigt werden.

2. Vorrichtung nach Anspruch 1, **dadurch gekennzeichnet, dass** im Speicher (5) Routinen zur Erzeugung der Daten implementiert sind.

3. Vorrichtung nach Anspruch 2, **dadurch gekennzeichnet, dass** die Routinen ein Bestandteil eines Anwendungsprogramms sind oder als ein Zusatz zu einem Betriebssystem ausgebildet sind.

4. Vorrichtung nach einem der vorhergehenden Ansprüche, **dadurch gekennzeichnet, dass** sie eine gegen Manipulationen und/ oder gegen Ausspähen geschützte Hardware aufweist.

5. Vorrichtung nach einem der vorhergehenden Ansprüche, **dadurch gekennzeichnet, dass** sie nur für einen vorgegebenen Zeitraum für die Erzeugung von Daten nutzbar ist.

6. Vorrichtung nach einem der vorhergehenden Ansprüche, **dadurch gekennzeichnet, dass** die erzeugten Daten Daten für eine Initialisierung von Sicherheitsdatenträgern sind.

7. Vorrichtung nach Anspruch 6, **dadurch gekennzeichnet, dass** die Initialisierungsdaten einen kryptographisch gesicherten Datensatz umfassen.

8. Vorrichtung nach Anspruch 7, **dadurch gekennzeichnet, dass** die Initialisierungsdaten einen Satz von Parametern umfassen, der dem kryptographisch gesicherten Datensatz zugeordnet ist und für die Durchführung der Initialisierung der Sicherheitsdatenträger auf Basis des kryptographisch gesicherten Datensatzes benötigt wird.

9. Vorrichtung nach einem der Ansprüche 1 bis 5, **dadurch gekennzeichnet, dass** die erzeugten Daten biometrische Referenzdaten sind.

10. Verfahren zur Erzeugung von Daten, wobei einem tragbaren Modul (1) über eine USB-Schnittstelle (6) Roh-Daten übermittelt werden und die zu erzeugenden Daten vom tragbaren Modul (1) mit Hilfe der Roh-Daten und mit Hilfe von Geheimdaten, die in einem Speicher (5) des tragbaren Moduls (1) abgelegt sind, erzeugt werden und wobei die Erzeugung der Daten gestartet wird, sobald das tragbare Modul (1) feststellt, dass im Speicher (5) des tragbaren Moduls (1) eine oder mehrere Dateien vorhanden sind, die für die Erzeugung der Daten benötigt werden.

11. Verfahren nach Anspruch 10, **dadurch gekennzeichnet, dass** wenigstens eine Datei mit den Roh-Daten oder mit sonstigen für die Erzeugung der Daten benötigten Daten über die USB-Schnittstelle (6) in ein erstes Verzeichnis im Speicher (5) des tragbaren Moduls (1) übertragen wird.

12. Verfahren nach einem der Ansprüche 10 oder 11, **dadurch gekennzeichnet, dass** die Erzeugung der Initialisierungsdaten nur dann gestartet wird, wenn vom tragbaren Modul (1) das Vorliegen einer Berechtigung zur Erzeugung der Initialisierungsdaten festgestellt wird.

13. Verfahren nach einem der Ansprüche 10 bis 12, **dadurch gekennzeichnet, dass** die erzeugten Initialisierungsdaten in einem zweiten Verzeichnis im Speicher (5) des tragbaren Moduls (1) für eine Übertragung über die USB-Schnittstelle (6) bereitgestellt werden.

14. Verfahren nach einem der Ansprüche 10 bis 13, **dadurch gekennzeichnet, dass** im Speicher (5) des tragbaren Moduls (1) gespeicherte sicherheitsrelevante Daten jeweils gelöscht werden, wenn sie nicht mehr benötigt werden.
